# EUROPÄISCHE PATENTSCHRIFT

(11) **EP 1 614 856 B1**
(45) Veröffentlichungstag und Bekanntmachung des Hinweises auf die Patenterteilung: **23.06.2010**
(21) Anmeldenummer: 04016250.5
(22) Anmeldetag: 09.07.2004
(51) Int. Cl.: F01D 5/00

(54) **Vorrichtung zum Ausbauen von Schaufeln einer Turbine oder eines Verdichters**
Device for demounting of a turbine or compressor blade
Dispositif pour démonter une aube de turbine ou compresseur

(43) Veröffentlichungstag der Anmeldung: 11.01.2006
(73) Patentinhaber: SIEMENS AKTIENGESELLSCHAFT, 80333 München (DE)
(72) Erfinder: Hartmann, Martin, 44799 Bochum (DE); Polanz, Werner, 47178 Duisburg (DE); Rintzel, Sabine, 45472 Mülheim (DE); Schroeder, Peter, 45307 Essen (DE); Shevchenko, Vadim, 44265 Dortmund (DE); Tenrahm, Thomas, 46537 Dinslaken (DE); Vonnemann, Bernd, 45968 Gladbeck (DE)

(56) Entgegenhaltungen:
- EP-A- 0 013 772
- DE-A- 10 020 229
- US-B1- 6 416 286

## Beschreibung

Die Erfindung betrifft das Gebiet der Wartung, Reparatur und Erneuerung von Schaufeln einer Turbine oder eines Verdichters, welche mit einem Schaufelfuß an einer Radscheibe eines Schaufelrades einer solchen Maschine eingeschoben und dort gehaltert sind.

Schaufeln der oben genannten Art von modernen Turbinen oder Verdichtern, beispielsweise Verdichterlaufschaufeln, sind mit Beschichtungen versehen, die nach einer gewissen Betriebszeit erneuert werden müssen. Für die Erneuerung der Beschichtung müssen die Schaufeln aus der Turbine bzw. dem Verdichter ausgebaut werden. Der Ausbau solcher Verdichterlaufschaufeln muss aufgrund der zu bewältigenden vielfältigen Tätigkeiten manuell erfolgen und ist vergleichsweise zeitaufwändig. Während der Zeit des Schaufelausbaus kann an anderen Stellen eines Läufers der jeweiligen Turbine bzw. des Verdichters, wie z.B. im Bereich der Brennkammernabe nicht gearbeitet werden.

Es ist daher gängige Praxis, dass der Läufer zum Wiederbeschichten seiner Schaufeln entstapelt wird und die Schaufeln der Turbine bzw. des Verdichters dann entweder in den beschaufelten Schaufelrädern wiederbeschichtet oder aus den Radscheiben ausgebaut und einzeln neu beschichtet werden.

Aus der US 6,416,286 sind zwei Vorrichtungen bekannt, die den Einbau der letzten Schaufel eines Laufschaufelkranzes unterstützen. Die Schaufeln sind als Deckbandschaufeln ausgebildet und werden einzeln in axiale Haltenuten einer Rotorscheibe eingeschoben. Da die Deckbänder - in radialer Richtung betrachtet - z-förmig ausgebildet sind, ist ein axiales Einschieben der letzten Laufschaufel in den sonst vollständig bestückten Laufschaufelkranz nicht möglich. Daher muss die letzte Turbinenschaufel des Laufschaufelkranzes (ohne Laufschaufelfuß) aufgrund des Deckbandes radial eingebracht werden. Um dies zu ermöglichen, wird der annähernd geschlossene Deckbandring sowohl in Axialrichtung als auch in Tangentialrichtung, d.h. Umfangsrichtung, gespreizt. Dazu schlägt die US 6,416,286 vor, mit einer ersten Vorrichtung, umfassend zwei Gewindestangen, Klemmen und Schraubenmuttern, den Spalt des offnen Deckbandrings zu spreizen, was zu einer ausreichenden Weite in Umfangsrichtung führt. Eine zweite Vorrichtung, welche die Laufschaufelfüße der - bezogen auf die letzte Laufschaufel - benachbarten Laufschaufeln in Axialrichtung in entgegengesetzter Richtung mit Kraft beaufschlagt, erzwingt im Deckbandring eine ausreichende Weite in Axialrichtung, so dass die letzte Laufschaufel des Laufschaufelrings radial eingefügt werden kann, und deren Deckband den Deckbandring schließt. Anschließend kann durch axiales Einschieben eines separat ausgeführten Laufschaufelfußes die letzte Laufschaufel des Rings an der Rotorscheibe befestigt werden.

Außerdem zeigt die DE 100 20 229 A1 ein Verfahren und eine Vorrichtung zur Demontage einer Turbinenschaufel. Die Turbinenschaufel ist in einer axialen Haltenut eingeschoben. Zwischen dem Nutgrund der Haltenut und dem Laufschaufelfuß der Turbinenschaufel ist ein Montagespalt vorhanden, in den ein Hakenschieber eingeschoben werden kann. Der Hakenschieber ist mit Vorsprüngen bzw. Haken versehen, die korrespondierend zu Kühlluft-Zuführöffnungen geformt sind, welche sich am Schaufelfuß nutgrundseitig befinden. Nachdem der Hakenschieber in den Montagespalt eingeschoben worden ist und die Vorsprünge den Kühlluft-Zuführöffnungen gegenüberliegen, wird ein Stützschieber zusätzlich zwischen Nutgrund und Hakenschieber eingeschoben, der den Hakenschieber anhebt und somit die Haken mit den Kühlluft-Zuführöffnungen des Schaufelfußes verhakt. Anschließend kann die Laufschaufel durch Herausziehen des Hakenschiebers unter Zuhilfenahme einer Hydraulik aus der Haltenut herausgeschoben werden.

Ferner ist aus der US 4,455,730 eine Vorrichtung zur Demontage von Laufschaufeln eines Verdichters bekannt, die über einen in der Haltenut und im Schaufelfuß sitzenden, federgelagerten Pin lagegesichert sind. Zum Abscheren des Pins wird die Demontagevorrichtung an den Wellenbund des Rotors geklemmt, in dem die Laufschaufeln sitzen. Danach wird die Schaufel mit Hilfe eines hydraulisch angetriebenen Kipphebels verschoben.

Aus der nach Art. 54(3) EPÜ zum Stand der Technik gehörenden EP 1 541 804 A2 ist zudem ein Abziehwerkzeug für am Rotor einer Strömungsmaschine befestigte Laufschaufeln bekannt. Zur Demontage der Laufschaufel wird das Abziehwerkzeug an eine Kante des Rotors abgestützt. Danach wird ein hakenartiges Abziehglied in eine dazu am Schaufelfuß stirnseitig vorgesehene Kontur formschlüssig montiert, wonach das Ausrücken der Laufschaufel aus ihrer axialen Haltenut durch Anziehen einer Schraubenmutter ermöglicht wird, welche eine mit dem Abziehglied mittelbar verbundene Gewindestange zieht.

Der Erfindung liegt die Aufgabe zugrunde eine Vorrichtung zum Ausbau von Laufschaufeln bei Turbinen anzugeben, welche konstruktiv einfacher ausgebildet ist und bei deren Einsatz keine weiteren Rotorkomponenten beschädigt werden.

Die Aufgabe ist erfindungsgemäß mit einer Vorrichtung gemäß den Merkmalen des Anspruchs 1 gelöst.

Mit einer solchen erfindungsgemäßen Vorrichtung ist es möglich, dass die Schaufeln von Turbinen oder Verdichtern in vergleichsweise kurzer Zeit am zugehörigen Schaufelrad ausgebaut werden, ohne dass dazu der zugehörige Läufer entstapelt werden muss. Durch den Entfall des Entstapelns entfällt erfindungsgemäß ferner auch der Arbeitsgang des Wiederzusammensetzens des Läufers, so dass insgesamt erheblich Arbeitszeit eingespart und Kosten gesenkt werden können. Neben der deutlichen Ersparnis an Arbeitszeit wird erfindungsgemäß auch die Revisionszeit insgesamt erheblich verkürzt. Darüber hinaus kann auf eine Vorrichtung zum Entstapeln des Läufers verzichtet werden.

An der erfindungsgemäßen Vorrichtung ist ferner eine Halteeinrichtung vorgesehen, die zum Stützen der aus der Radscheibe sich herausbewegenden und/oder herausbewegten Schaufel angepasst ist. Mit einer solchen Halteeinrichtung wird die Schaufel während ihrer Entnahme geführt und das Gewicht der Schaufel, welches beispielsweise bis zu 30 kg betragen kann, abgefangen.

Am Läufer bekannter Turbinen oder Verdichter sind vielfach Dichtspitzen bzw. Dichtlippen ausgebildet, die während des Ausbaus von Schaufeln nicht beschädigt werden dürfen. Bei der erfindungsgemäßen Vorrichtung ist dazu eine Abdeckeinrichtung vorgesehen, die zum Überdecken der Dichtspitzen angepasst ist. Die Abdeckeinrichtung ist dazu insbesondere zusammen mit der Halteeinrichtung einteilig gestaltet, was beispielsweise mit Hilfe einer Führungsfläche geschehen kann, die über die Dichtspitzen gelegt und am Läufer abgestützt wird und auf die dann die aus der Radscheibe herauszubewegende Schaufel auf- bzw. eingeschoben wird.

Bei der erfindungsgemäßen Vorrichtung ist deren Abstützeinrichtung mit mindestens einem Lager zum Anlegen an einer Stufe des Schaufelrades angepasst. Eine solche Vorrichtung kann kompakt gestaltet und für verschiedene Typen von Turbinen oder Verdichtern verwendet werden, weil sie vergleichsweise einfache Einrichtungselemente aufweisen kann, die mit einfachen Verstellmöglichkeiten zum Anpassen an unterschiedliche Typen von Schaufelrädern versehen sein können. Eine solche kompakte Vorrichtung kann bei den genannten Arbeiten vom Wartungspersonal leicht gehandhabt werden.

Alternativ oder zusätzlich kann die Vorrichtung mit einer Abstützeinrichtung versehen sein, die mit mindestens einem Lager an einer Teilfuge eines mindestens zweiteiligen Gehäuses der Turbine oder des Verdichters angelegt. Eine solche Vorrichtung kann montiert werden, nachdem zum Beispiel ein Oberteil des mindestens zweiteiligen Gehäuses abhoben und damit der Läufer der zugehörigen Turbine oder des Verdichters zugänglich geworden ist. Die dann auf der Teilfuge aufgesetzte Vorrichtung kann vom Entnehmen und gegebenenfalls zum Haltern von mehreren Schaufeln eines Schaufelrades angepasst sein. Es können einzelne Schaufeln aufeinander folgend oder gegebenenfalls zugleich aus dem Schaufelrad herausbewegt werden.

Besonders vorteilhaft ist eine Vorrichtung, bei der die Aktuatoreinrichtung mit einem Zugelement zum Umgreifen der aus der Radscheibe herauszubewegenden Schaufel gestaltet ist. Eine solche Vorrichtung ist besonders gut zu handhaben und betriebssicher.

Als Aktuatoreinrichtung für die erfindungsgemäße Vorrichtung eignet sich besonders eine hydraulische Zylinder-Kolben-Anordnung, mit der auf engem Raum vergleichsweise hohe Zug- oder Druckkräfte erzeugt werden können.

Die Aktuatoreinrichtung ist ferner vorteilhaft mit einer Anlagefläche zum Herausbewegen eines an der Schaufel angeordneten Sicherungselements, insbesondere eines Sicherungsblechs, aus der Radscheibe zusammen mit der zugehörigen Schaufel gestaltet. Damit das genannte Sicherungsblech aus der Radscheibe herausgeschoben werden kann, kann mit der erfindungsgemäßen Vorrichtung vorteilhaft von dieser beim Ausdrückvorgang zugleich eine Lasche des Sicherungsblechs einseitig hochgebogen werden und damit die Wirkung des Sicherungsblechs außerkraftgesetzt werden. Beim Wiedereinbau der Schaufeln wird dann ein neues Sicherungsblech eingesetzt.

An der erfindungsgemäßen Vorrichtung sollte ferner eine Überwachungseinrichtung vorgesehen sein, die zum Begrenzen der mit der Aktuatoreinrichtung auf die Schaufel einwirkenden Kraft angepasst ist. Eine solche Überwachungseinrichtung kann beispielsweise eine Kraftmessdose und eine entsprechende Steuer und/oder Anzeige für die Aktuatoreinrichtung sein. Mit der Überwachungseinrichtung wird insbesondere verhindert, dass die an der Radscheibe ausgebildete, den Schaufelfuß aufnehmende Nut während des Ausbaus beschädigt werden könnte.

Nachfolgend wird ein Ausführungsbeispiel einer erfindungsgemäßen Vorrichtung anhand der beigefügten schematischen Zeichnungen näher erläutert. Es zeigt:
- Fig. 1: ein perspektivische Seitenansicht einer erfindungsgemäßen Vorrichtung während des Ausbauens einer Schaufel an einem Schaufelrad und
- Fig. 2: eine Vorrichtung gemäß Fig. 1 in einer perspektivischen Draufsicht.

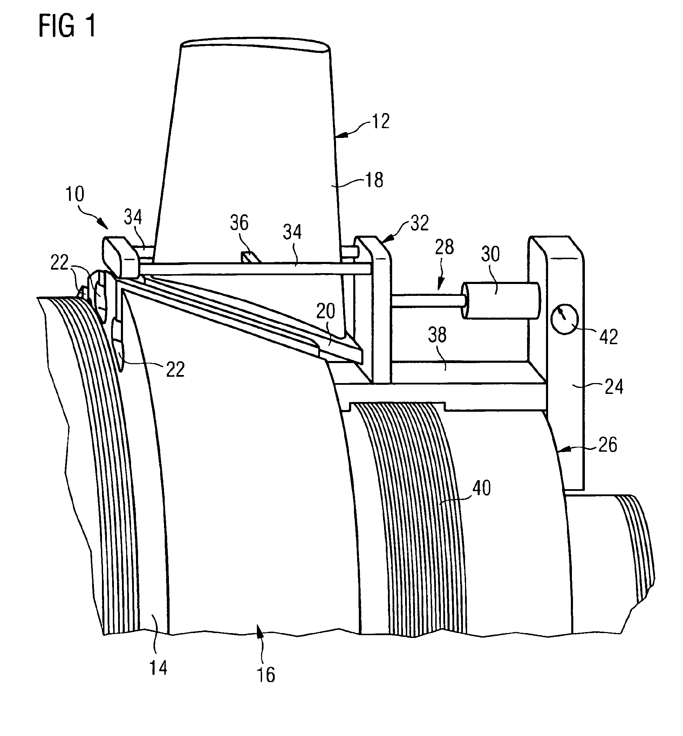

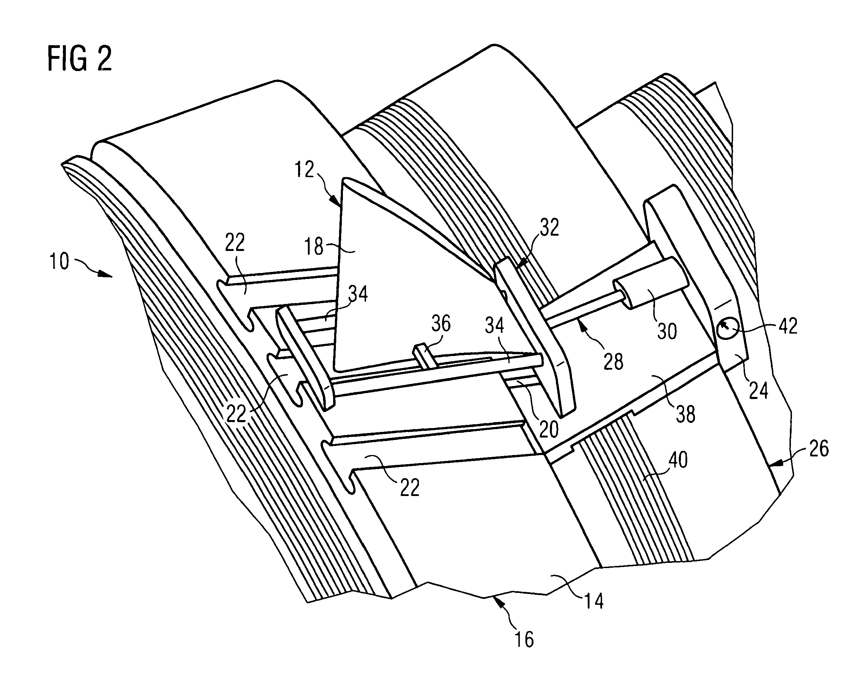

In den Fig. 1 und 2 ist eine Vorrichtung 10 zum Ausbauen von Schaufeln 12 eines Verdichters veranschaulicht, die an einer Radscheibe 14 eines Schaufelrades 16 bzw. Läufers des Verdichters angebracht sind. Die Schaufeln 12 weisen jeweils ein Schaufelblatt 18 auf, das mittels eines Schaufelfußes 20 in einer Nut 22 der Radscheibe 14 befestigt ist. Der Schaufelfuß 20 ist dabei in Axialrichtung des Schaufelrades 16 in die Nut 22 eingeschoben.

Damit die Schaufeln 12 auch ohne ein zeitaufwändiges Entstapeln des Läufers beispielsweise zum Neubeschichten kostengünstig entnommen werden können, ist die Vorrichtung 10 mit einer Abstützeinrichtung 24 versehen, die an eine Stufe 26 des Schaufelrades 16 angelegt und dort abgestützt werden kann.

Mit der Abstützeinrichtung 24 ist eine Aktuatoreinrichtung 28 betrieblich gekoppelt, die zum maschinellen Bewegen der Schaufel 12 aus der Radscheibe 14 vorgesehen ist. Die Aktuatoreinrichtung 28 umfasst eine an der Abstützeinrichtung 24 angeordnete Zylinder-Kolben-Anordnung 30, an deren Kolben ein Zugelement 32 angeordnet ist. Das Zugelement 32 umgreift die Schaufel 12 an ihrem Schaufelblatt 18 und ist dabei mit zwei Zugstäben 34 gestaltet an denen jeweils ein Haltestab 36 absteht. Die Haltestäbe 36 liegen am Schaufelblatt 18 an und stützen dieses in Umfangrichtung des Schaufelrades 16 ab.

Mit den Haltestäben 36 und einer nachfolgend erläuterten Haltefläche 38 ist eine Halteeinrichtung gestaltet, welche die Schaufel 12 während und nach dem Herausbewegen aus der Radscheibe 14 abstützt und so diese kraftaufwändige und teilweise gefährliche Arbeit einer Bedienperson erspart. Die genannte Haltefläche 38 ist bezogen auf Fig. 1 unter der Zylinder-Kolben-Anordnung 30 vorgesehen und stützt sich dort vor der Stufe 26 am Schaufelrad 16 ab. In diesem Bereich des Schaufelrades sind an dessen Umfang ferner eine Vielzahl Dichtspitzen 40 ausgebildet, die von der Haltefläche 38 überdeckt werden. Die Haltefläche 38 bildet damit eine Abdeckeinrichtung zum Schutz der Dichtspitzen 40 während des Ausbaus einer Schaufel 12.

An der Vorrichtung 10 ist schließlich noch im Bereich der Abstützeinrichtung 24 eine Überwachungseinrichtung 42 in Form einer Kraft-/Weg-Messdose mit Anzeige vorgesehen, welche die mit Hilfe der Zylinder-Kolben-Anordnung 30 erzeugte Hydraulikkraft für eine Bedienperson anzeigt und gegebenenfalls auf einen Maximalwert begrenzt. Mit dieser Kraftbegrenzung wird eine Beschädigung des Schaufelblattes 18, des Schaufelfußes 20, der Nut 22 und auch der Vorrichtung 10 selbst während des Ausbaus einer Schaufel 12 verhindert.

## Patentansprüche

1. Vorrichtung (10) zum Ausbauen von Schaufeln (12),
die mit einem Schaufelfuß (20) an einer Radscheibe (14) eines Schaufelrades (16) einer Turbine oder eines Verdichters eingeschoben sind,
mit einer Abstützeinrichtung (24), die zum Anlegen an mindestens einem Bauteil der Turbine ausgebildet ist, und
eine Aktuatoreinrichtung (28), die mit der Abstützeinrichtung (24) gekoppelt und zum maschinellen Herausbewegen des Schaufelfußes (20) aus der Radscheibe (14) ausgebildet ist,
wobei die Abstützvorrichtung (24) mit mindestens einem Lager zum Anlegen an einer Stufe (26) des Schaufelrades (16) angepasst ist,
**dadurch gekennzeichnet, dass**
eine Halteeinrichtung (36) vorgesehen ist, die zum Stützen der aus der Radscheibe (14) sich herausbewegenden und/oder herausbewegten Schaufel (12) angepasst ist und dass
eine Abdeckeinrichtung (38) vorgesehen ist, die zum Überdecken von am Schaufelrad (16) ausgebildeten Dichtspitzen (40) angepasst ist, wobei die Abdeckeinrichtung (38) zusammen mit der Halteeinrichtung (36) einteilig gestaltet ist.

2. Vorrichtung (10) nach Anspruch 1,
**dadurch gekennzeichnet, dass**
die Aktuatoreinrichtung (28) mit einem Zugelement (32) zum Greifen der aus der Radscheibe (14) herauszubewegenden Schaufel (12) gestaltet ist.

3. Vorrichtung (10) nach Anspruch 1 oder 2,
**dadurch gekennzeichnet, dass**
die Aktuatoreinrichtung (28) mit einer hydraulischen Zylinder-Kolben-Anordnung (30) gestaltet ist.

4. Vorrichtung (10) nach einem der vorhergehenden Ansprüche,
**dadurch gekennzeichnet, dass**
eine Überwachungseinrichtung (42) vorgesehen ist, die zum Begrenzen der mit der Aktuatoreinrichtung (28) auf die Schaufel (12) einwirkenden Kraft angepasst ist.

## Claims

1. Device (10) for the demounting of blades (12) which are pushed in with a blade root (20) on a wheel disk (14) of a blade wheel (16) of a turbine or of a compressor, with a supporting means (24) which is designed to be brought to bear against at least one component of the turbine, and with an actuator means (28) which is coupled to the supporting means (24) and is designed for moving the blade root (20) mechanically out of the wheel disk (14), the supporting means (24), with at least one bearing, being adapted to be brought to bear against a step (26) of the blade wheel (16), **characterized in that** a holding means (36) is provided, which is adapted for supporting the blade (12) moving and/or moved out of the wheel disk (14), and that a covering means (38) is provided, which is adapted for covering sealing tips (40) formed on the blade wheel (16), the covering means (38) being designed in one part together with the holding means (36).

2. Device (10) according to Claim 1, **characterized in that** the actuator means (28) is designed with a tension element (32) for gripping the blade (12) moving out of the wheel disk (14).

3. Device (10) according to Claim 1 or 2, **characterized in that** the actuator means (28) is designed with a hydraulic cylinder/piston arrangement (30).

4. Device (10) according to one of the preceding claims, **characterized in that** a monitoring means (42) is provided, which is adapted for limiting the force acting on the blade (12) by the actuator means (28).

## Revendications

1. Dispositif ( 10 ) pour démonter des aubes ( 12 ) qui sont insérées par une emplanture ( 20 ) d'aube sur un disque ( 14 ) d'une roue ( 16 ) d'aubes d'une turbine ou d'un compresseur,
comprenant un dispositif ( 24 ) d'appui, qui est constitué pour s'appliquer à au moins un élément de la turbine, et un dispositif ( 28 ) d'actionneur, qui est couplé au dispositif ( 24 ) d'appui et qui est constitué pour sortir automatiquement l'emplanture ( 20 ) de l'aube du disque ( 14 ) de roue,
dans lequel le dispositif ( 24 ) d'appui est adapté par au moins un palier pour s'appliquer à un gradin ( 26 ) de la roue ( 16 ) d'aubes,
**caractérisé en ce que**
il est prévu un dispositif ( 36 ) de maintien qui est conçu pour l'appui des aubes ( 12 ) sortant et/ou sorties du disque ( 14 ) de roue et **en ce qu'**il est prévu un dispositif ( 38 ) de recouvrement, qui est adapté pour recouvrir des pointes ( 40 ) d'étanchéité formées sur la roue ( 16 ) d'aubes, le dispositif ( 38 ) de recouvrement étant en une seule pièce avec le dispositif ( 36 ) de maintien.

2. Dispositif ( 10 ) suivant la revendication 1,
**caractérisé en ce que**
le dispositif ( 28 ) d'actionneur est conformé en ayant un élément ( 32 ) de traction pour accrocher les aubes sortant du disque ( 14 ) de roue.

3. Dispositif ( 10 ) suivant la revendication 1 ou 2,
**caractérisé en ce que**
le dispositif ( 28 ) actionneur est conformé en ayant un agencement ( 30 ) cylindre-piston hydraulique.

4. Dispositif ( 10 ) suivant l'une des revendications précédentes,
**caractérisé en ce que**
il est prévu un dispositif ( 42 ) de contrôle, qui est conçu pour limiter la force agissant sur les aubes ( 12 ) par le dispositif ( 28 ) d'actionneur.
